# EUROPEAN PATENT SPECIFICATION

(11) **EP 3 406 965 B1**
(45) Date of publication and mention of the grant of the patent: **14.07.2021**
(21) Application number: 18174192.7
(22) Date of filing: 24.05.2018
(51) Int. Cl.: F21S 45/33, B60Q 1/00, F21S 45/10, F21S 45/50

(54) **LIGHTING DEVICE FOR VEHICLES WITH IMPROVED LAMP MOUNTING COVER**
BELEUCHTUNGSVORRICHTUNG FÜR FAHRZEUGE MIT VERBESSERTER LAMPENMONTAGEABDECKUNG
DISPOSITIF D'ÉCLAIRAGE POUR VÉHICULES COMPORTANT UN COUVERCLE DE MONTAGE DE LAMPE AMÉLIORÉ

(30) Priority: 24.05.2017 IT 201700056441
(43) Date of publication of application: 28.11.2018
(73) Proprietor: Marelli Automotive Lighting Italy S.p.A., 10078 Venaria Reale (TO) (IT)
(72) Inventor: BARBERO, Marco, 10078 VENARIA REALE (TO) (IT)
(74) Representative: Plebani, Rinaldo

(56) References cited:
- EP-A2- 1 818 609
- AT-U1- 7 631
- DE-A1- 4 443 682
- DE-A1- 19 516 544
- DE-A1-102004 007 355
- US-A- 4 809 144

## Description

### Priority Claim

This application claims priority from Italian Patent Application No. 102017000056441 filed on May 24, 2017.

### Technical field of the invention

The present invention relates to a lighting device for vehicles with an improved lamp mounting cover. The device in question, for example a headlight or a headlamp, comprises a housing body defining a rear mounting seat for at least one light source, said seat being closed at the rear by a cover, which can be releasably coupled to the housing body by means of a fluid-tight fastening. The housing body defining the mounting seat is also closed at the front by a lens.

### Prior art

Known lighting devices, or headlights, for motor vehicles comprise an overall cup-shaped housing body, closed at the front by a lens and provided, at the rear, with one or more mounting seats and/or housings for as many lamps or other light sources. The mounting seat extends from the housing body and is generally fluid-tight at the rear thanks to a cover, preferably made of a deformable plastic material, e.g. rubber, which must be removed to mount/replace the lamp or carry out maintenance work in the headlight, and then be reassembled.

The cover is usually axially symmetrical and comprises a rear bottom wall and a circular side wall axially extending from the rear wall, so that the cover is substantially cup-shaped.

In particular, the circular wall has a plurality of projections and annular grooves formed on its own annularly extending radially inner side surface. These projections and grooves act in use as a gasket applied to the mounting seat of the housing body of the headlight, thus creating a seal between the circular wall of the cover and the mounting seat.

The mounting seat has a typical circular shape and has an outer diameter slightly larger than the inner diameter of the circular wall of the cover to ensure a sealing at the grooves.

However, this closing system does not guarantee a proper positioning of the cover relative to the seat of the housing body of the headlight. In fact, an imperfect and hardly detectable positioning of the cover can occur during assembly due to the cover deformability.

This imperfect positioning causes a loss of fluid tightness that may cause, in use, the entry of liquids, fumes or dust inside the body of the headlight, which may opacify or damage the optical parts of the headlight, with a consequent decay of the device's performance.

As already known, the headlights for motor vehicles are also subject to the formation of condensation under particular atmospheric conditions. A known technique to overcome this drawback involves inserting some hygroscopic material into the housing body of the headlight, preferably arranged inside a suitable envelope, for absorbing any moisture inside the headlight, thus avoiding condensation on the lens and/or reflector. An example of such headlight is disclosed in DE-A-102004007355.

However, if free to move without constraints inside the body of the headlight, the envelope containing the hygroscopic material can lead to a series of technical problems: uncertain correct positioning of the envelope, possible lower operating efficiency of the hygroscopic material and scarce accessibility of the envelope during the maintenance for its replacement.

### Summary of the invention

The object of the invention is to provide a lighting device for vehicles with an improved lamp mounting cover, which is highly reliable, inexpensive and at least partially allows overcoming the aforesaid disadvantages of the state of the art related to the headlights for motor vehicles of a known type.

According to the invention, this object is achieved by a vehicle lighting device with an improved lamp mounting cover having the characteristics set out in the appended claims.

### Brief Description of Drawings

Further characteristics and advantages of the present invention will become clearer from the following description of a preferred and non-limiting embodiment, given with reference to the figures of the accompanying drawings, in which:
- Figure 1 schematically shows a rear perspective view of a lighting device for vehicles comprising a housing body, provided at the rear with at least one mounting seat for at least one light source, and an improved cover according to the invention, which closes said seat at the rear;
- Figure 2 schematically shows a sectional view taken along a plane II-II of the lighting device of Figure 1, with parts removed for simplicity's sake;
- Figure 3 is a front perspective view of three quarters of the improved cover according to the invention; and
- Figure 4 shows in enlarged scale a radial section view of a detail of Figure 2, in particular of the coupling zone between the improved cover and the mounting seat.

### Detailed description

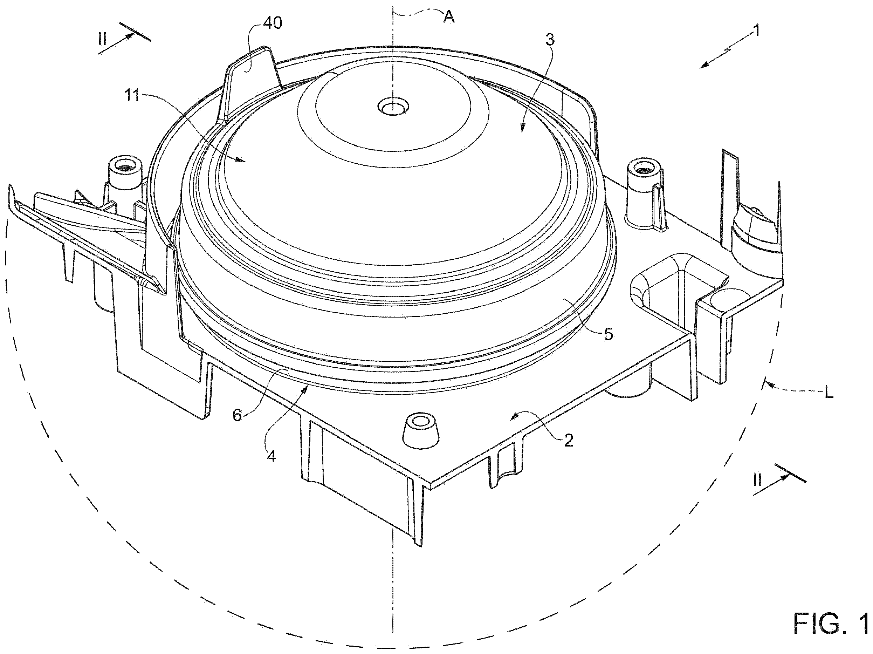

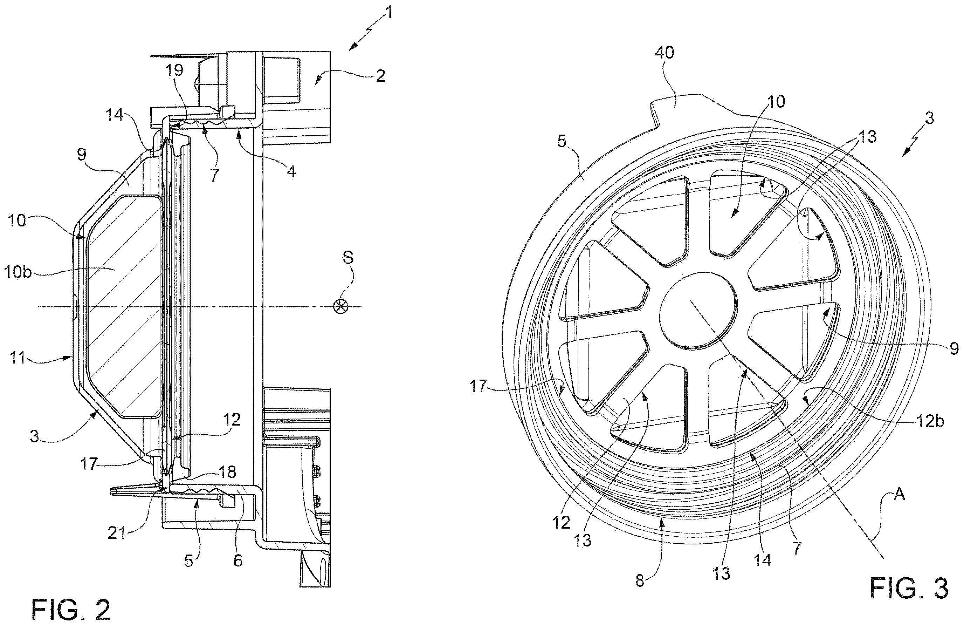

With reference to Figures 1 to 4, the reference number 1 generally indicates a lighting device for vehicles, in the non-limiting example shown formed by a front headlight, comprising:
- a housing body or casing 2, already known and only partially shown for simplicity's sake;
- a rear cover 3;
- a neutral or optically active front lens L, schematically shown in broken lines only in Figure 1;
- at least one light source S arranged inside the housing body 2, only schematically shown in Figure 2.

The housing body 2 is provided with at least one rear mounting seat 4 for the at least one light source S, which is mounted in the seat 4 in a known manner, not shown for simplicity's sake. The seat 4 is closed at the rear by the cover 3, which is arranged on the side opposite to the one facing the lens L. The housing body 2 defining the mounting seat 4 is also closed at the front by the lens L.

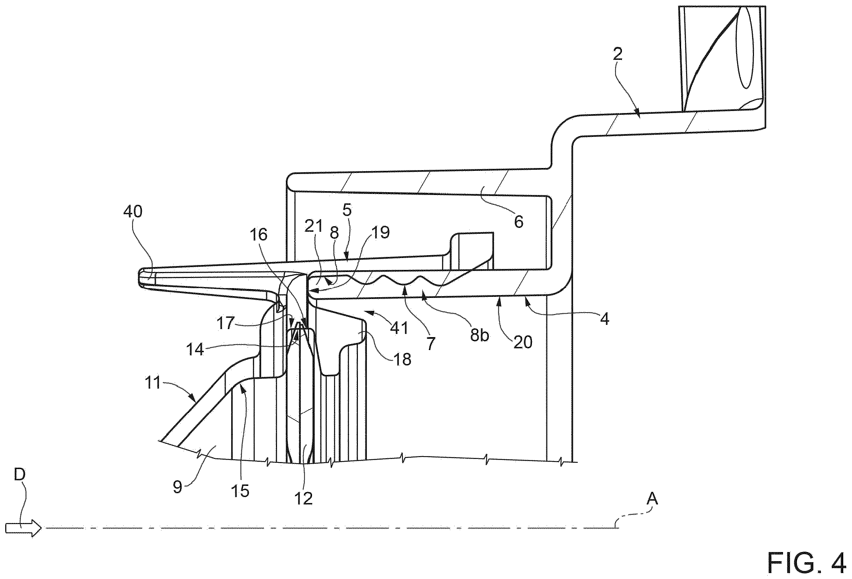

The cover 3 has a symmetry axis A and comprises a circular side wall 5 axially extending in a direction D of insertion in use of the cover 3 in/on the mounting seat 4 of the body 2, indicated by an arrow in Figure 4 and parallel to an axial development direction of the mounting seat 4. The side wall 5 can be releasably coupled, as discussed below, to the housing body 2 by means of a fluid-tight fastening.

The mounting seat 4 of the housing body 2 has an annular edge 6 axially extending outstanding from the body 2 on the side opposite to the one facing the lens L. This annular edge 6 is coupled, in use, to the cover 3 by means of the circular side wall 5.

The wall 5 has a plurality of annular projections and grooves 7 formed on its radially inner side surface 8. Said projections and grooves 7 define a stretch 8b of corrugated side surface (Figure 4) of the side surface 8 designed/configured to form, in use, a hydraulic seal against/on the annular edge 6 of the mounting seat 4 of the housing body 2, thereby creating a seal between the circular side wall 5 of the cover 3 and the mounting seat 4.

According to a first aspect of the invention, the circular side wall 5 of the cover 3 is made of an elastomeric material and is fluid-tightly fitted over the annular edge 6, radially on the outside thereof. The annular edge 6 is therefore designed/configured with its own outer diameter having a transversal dimension with respect to the axis A which is substantially equal to or slightly larger than the inner diameter of the circular wall 5 of the cover 3, thus being able to receiving with an interference fit the portion 8b of corrugated side surface of the circular side wall 5, as schematically shown in Figure 4.

According to a relevant aspect of the present invention, the cover 3 is designed/configured to delimit, on the rear of the light source S, a chamber 9 suitable for housing at least a known envelope 10 containing an absorbing or anyway drying, e.g. hygroscopic, material 10b, able to absorb any moisture in the environment inside the lighting device 1 to prevent condensation.

The chamber 9 is delimited at its rear and on the side thereof by a rear bottom wall 11 of the cover 3, which is overall cup-shaped. The bottom wall 11 is made in one piece with the circular side wall 5, in the same elastomeric material as the latter, and is concave towards the light source S. For example it is dome-shaped, so as to contain within its own concavity the envelope 10. The side wall 5 axially cantilever extends from the bottom wall 11 towards the light source S.

Moreover, according to another aspect of the present invention, the cover 3 further comprises a separating grid or partition 12, which delimits the chamber 9 at the front, then towards the circular side wall 5. The separating grid or partition 12 is made of a material stiffer than the elastomeric material constituting the side wall 5 and the bottom wall 11, e.g. it is made of a non-elastomeric synthetic plastic material. The casing 10 containing the drying/hygroscopic material is contained in the chamber 9, between the dome-shaped wall 11 and the separating partition 12.

In particular, according to the non-limiting embodiment shown, the separating partition 12 is shaped like a grid, and is therefore provided with a plurality of through openings 13, which hydraulically connect the chamber 9 to the remaining inside of the cover 3 and above all to the inside of the housing body 2. In any case, the separating partition 12 must comprise at least one opening 13 allowing the passage of moisture, which is absorbed by the drying material 10b through the envelope 10 that must be permeable to the air, e.g. porous or anyway pervious to ambient air, e.g. made of a non-woven fabric or gauze.

The separating partition 12, which is designed as a self-supporting element independent of the side walls 5 and of the bottom wall 11, is releasably coupled, e.g. snap-coupled, to an annular portion 16 of the cover 3, connecting the side wall 5 and the bottom wall 11. The annular portion 16 is made of a single piece with the side walls 5 and the bottom wall 11, is made of their same elastomeric material and is provided with an annular groove 14 arranged between the side wall 5 and the concave bottom wall 11. A radially outer peripheral edge 17 of the separating partition 12, which is V-shaped in a radial section, is snap-coupled in the groove 14.

The envelope 10 is then arranged inside the chamber 9 and is easily replaceable simply by uncoupling the separating partition 12 from the annular groove 14. This operation is simplified by the elastomeric nature of the material constituting the connecting portion 16, after removing the cover 3 from the seat 4 of the housing body 2. This last operation is facilitated by the elastomeric nature of the material constituting the side wall 5 and by the presence of a flap-shaped grip 40, formed in one piece with the connecting portion 16 and lying radially on the outside, so as to axially extend and project from the bottom wall 11 on the side opposite to the side wall 5, substantially flush with this latter.

It has been found that, in this way, any moisture inside the housing body 2 is promptly and effectively eliminated and that a periodical replacement of the drying material 10b is very fast and simple, at the same time ensuring an optimum hydraulic seal between the cover 3 and the mounting seat 4, avoiding any positioning errors and preventing the drying material 10b from moving uncontrollably within the housing body 2.

It has also been found, however, that due to the elastic flexibility of the connecting portion 16, the separating partition 12 could be accidentally released from the groove 14 during the coupling operation between the side wall 5 and the annular edge 6, which typically occurs by pushing the cover 3 in the direction D by means of a pressure by hand or with a tool against the bottom wall 11.

According to another relevant aspect of the present invention, therefore, the cover 3 further comprises a lip or projection or annular spur 18, which extends axially projecting from the connecting portion 16, radially on the inside thereof, towards the housing body 2, namely on the side opposite to the end wall 11. The annular lip 18 is provided in a position immediately adjacent to the annular groove 14 and extends substantially parallel to the side wall 5, but radially spaced apart from this latter.

In particular, the annular lip 18 has an outer diameter smaller than the inner diameter of the circular side wall 5 and is flexible in the radial direction, in particularly towards the outside with respect to the axis A.

The lip 18 and the circular side wall 5 of the cover 3 delimit there between an annular seat 19 designed for receiving, in axial abutment thereto and with a radial clearance, in use, one end 21 of the annular edge 6 of the mounting seat 4 of the housing body 2, when coupling the cover 3 and the mounting seat 4 occurs. This annular seat 19 is in particular delimited towards the side wall 5 by a radially outer conical side surface 41 of the annular lip 18. The conical side surface 41 is tapered on the side opposite to the end wall 11, i.e. so that the conical surface 41 converges towards the axis A as it moves away from the connecting portion 16, from which the annular lip 18 projects.

When mounting the cover 3 on the edge 6 of the mounting seat 4, the thrust applied to the cover 3 in the direction D, together with the particular shape of the lip 18, causes the lip 18 to radially deflect outwards, thus recovering the radial clearance in the annular seat 19 between the conical surface 41 and the inner side surface of the end 21 of the annular edge 6.

Therefore, the conical surface 41 meets an inner side surface 20 of the annular edge 6 and, thanks to its conical shape, behaves like a wedge, thus defining an axial and above all radial stop for the cover 3 on the mounting seat 4.

In particular, when the conical surface 41 radially abuts against the side surface 20, it prevents both the elastic deformation of the bottom wall 11 due to the thrust in the direction D exerted on it, and the radial elastic deformation towards the outside of the side wall 5 due to the axial thrust, which it receives from the bottom wall 11. Such latter deformation could, on the one hand, uncouple the cover 3 and the assembly seat 4 and, on the other hand, cause the expulsion of the separating partition 12 from the groove 14.

As a matter of fact, both elastic deformations described above are blocked by the lip 18 as soon as it meets the surface 20.

The advantages achieved by the present invention are evident from what previously described.

In particular, thanks to the presence of the chamber 9 included in the cover 3, the envelope 10 containing the drying material 10b absorbing the moisture to avoid any condensation inside the lighting device 1 is contained inside a delimited space and, therefore, is no longer free to move without constraints. In this way:
- there is the certainty of a correct positioning of the envelope 10 thanks to the presence of the partition 12, which stops at the front the envelope 10 in a predetermined position inside the chamber 9;
- the effectiveness of the drying material 10b is guaranteed; and
- the envelope 10 is easily accessible to be replaced by simply uncoupling the cover 3 from the mounting seat 4 and extracting the partition 12 from the groove 14.

Moreover, the presence of the annular lip 18 entails the axial and radial locking of the cover 3 on the annular edge 6 of the mounting seat 4, thus defining a correct positioning of the cover 3, not only ensuring a perfect hydraulic seal of the cover 3 on the mounting seat 4 but also avoiding any possible accidental detachment of the separating partition 12.

It is clear that modifications and variations can be made to the headlight 1 here described and shown without thereby departing from the scope of protection defined by the appended claims.

## Claims

1. Lighting device for vehicles (1), in particular a headlight or headlamp, comprising:
- a housing body (2) defining a rear mounting seat (4) for at least one light source (S);
- a lens (L) arranged at the front of said housing body (2); and
- a cover (3), which can be coupled in a releasable and fluid-tight manner to said housing body (2); said rear mounting seat (4) being closed in use at the rear by said cover (3), on the side opposite the one of said lens (L) wherein
i) said cover (3) defines, at the rear of said rear mounting seat (4), a chamber (9) housing in use at least one drying material (10b) for absorbing any moisture in the environment inside the housing body (2);
ii) said cover (3) has a symmetry axis (A) and comprises a radially outer circular side wall (5) for a fluid-tight coupling with said rear mounting seat (4) **characterized in that**, in combination
iii) an annular edge projects axially from said mounting seat; said cover (3) comprises an annular lip (18) flexible in a radial direction, outwards with respect to said axis (A); said annular lip (18) and said circular wall (5) defining between them an annular seat (19), which is an axial and radial abutment for the annular edge (6);
iv) said annular lip (18) being configured to define in use an axial and radial locking of said cover (3) on said mounting seat (4);
v) said annular lip (18) is designed to receive said annular edge (6) within said annular seat (19) with a radial clearance; said radial clearance being small enough to be annulled as the result of a radial flexion towards the outside of the annular lip (18) following to an axial thrust exerted against said cover (3) in a direction (D) of insertion of the cover (3) into said mounting seat (4).

2. The device according to claim 1, **characterized in that** said cover (3) is overall cup-shaped and comprises: a bottom wall (11) delimiting said chamber (9) at the rear and on the side; and a separating partition (12) towards the inside of the housing body, delimiting said chamber (9) at the front; said separating partition (12) and said bottom wall (11) delimiting said chamber (9) on opposite sides to house between them an air-permeable envelope (10) containing said drying material (10b).

3. The lighting device according to claim 2, **characterized in that** said separating partition (12) comprises at least one through opening (13) to allow the passage of air and moisture between said chamber (9) and the inside of the housing body.

4. The lighting device according to claim 2 or 3, **characterized in that** said separating partition (12) is releasably coupled, preferably by snap coupling, to said circular side wall (5) of the cover (3) formed in one piece with, and axially projecting from, said bottom wall (11) and designed for fluid-tight coupling with said annular edge (6) of the mounting seat (4).

5. The lighting device according to claim 4, wherein said separating partition (12) is snap-coupled within an annular groove (14) formed in a connecting portion (16) between the bottom wall (11) and the circular side wall (5) of said cover (3).

6. The lighting device according to claim 5, **characterized in that** said bottom wall (11), circular side wall (5) and connecting portion (16) are made of an elastomeric material, while said separating partition (12) is made of a material more rigid than the elastomeric material of said bottom wall (11), circular side wall (5) and connecting portion (16).

7. The device according to claim 6, wherein said separating partition (12) is made of a non-elastomeric synthetic plastic material.

8. The device according to any one of the claims from 2 to 7, **characterized in that** said bottom wall (11) is dome-shaped.

## Patentansprüche

1. Beleuchtungsvorrichtung für Fahrzeuge (1), insbesondere ein Hauptscheinwerfer oder Fahrscheinwerfer, aufweisend:
- einen Gehäusekörper (2), der einen rückwärtigen Befestigungssitz (4) für mindestens eine Lichtquelle (S) bildet;
- eine Linse (L), die an der Vorderseite des Gehäusekörpers (2) angeordnet ist; und
- eine Abdeckung (3), die in lösbarer und flüssigkeitsdichter Weise mit dem Gehäusekörper (2) gekoppelt werden kann; wobei der rückwärtige Befestigungssitz (4) im Betrieb an der Rückseite auf der der Seite der Linse (L) entgegengesetzten Seite durch die Abdeckung (3) verschlossen ist, wobei
i) die Abdeckung (3) an der Rückseite des rückwärtigen Befestigungssitzes (4) eine Kammer (9) bildet, in der im Betrieb mindestens ein Trocknungsmaterial (10b) zum Absorbieren jeglicher Feuchtigkeit in der Umgebung innerhalb des Gehäusekörpers (2) untergebracht ist;
ii) die Abdeckung (3) eine Symmetrieachse (A) hat und eine radial äußere kreisförmige Seitenwand (5) zur flüssigkeitsdichten Verbindung mit dem hinteren Befestigungssitz (4) aufweist, **dadurch gekennzeichnet, dass** in Kombination
iii) ein ringförmiger Rand axial von dem Befestigungssitz vorspringt; wobei die Abdeckung (3) eine flexible und in einer radialen Richtung relativ zu der Achse (A) außerhalb gelegene ringförmige Lippe (18) aufweist; wobei die ringförmige Lippe (18) und die kreisförmige Wand (5) zwischen sich einen ringförmigen Sitz (19) bilden, der ein axiales und radiales Auflager für den ringförmigen Rand (6) bildet;
iv) wobei die ringförmige Lippe (18) dafür konfiguriert ist, im Betrieb eine axiale und radiale Verriegelung der Abdeckung (3) auf dem Befestigungssitz (4) zu bilden;
v) wobei die ringförmige Lippe (18) dafür konstruiert ist, den ringförmigen Rand (6) innerhalb des ringförmigen Sitzes (19) mit radialem Spiel aufzunehmen; wobei das radiale Spiel klein genug ist, dass es als Ergebnis einer radialen Biegung der ringförmigen Lippe (18) nach außen, die auf einen gegen die Abdeckung (3) in einer Richtung (D) des Einführens der Abdeckung (3) in den Befestigungssitz (4) ausgeübten axialen Druck folgt, aufgehoben wird.

2. Vorrichtung nach Anspruch 1, **dadurch gekennzeichnet, dass** die Abdeckung (3) allgemein becherförmig ist und aufweist: einen Boden (11), der die Kammer (9) hinten und auf der Seite begrenzt; und eine Trennwand (12) zum Inneren des Gehäusekörpers hin, welche die Kammer (9) an der Vorderseite begrenzt; wobei die Trennwand (12) und der Boden (11) die Kammer (9) auf entgegengesetzten Seiten begrenzen, sodass sie zwischen sich eine luftdurchlässige Umhüllung (10) aufnehmen, die das Trocknungsmaterial (10b) enthält.

3. Beleuchtungsvorrichtung nach Anspruch 2, **dadurch gekennzeichnet, dass** die Trennwand (12) mindestens eine Durchgangsöffnung (13) aufweist, um den Durchtritt von Luft und Feuchtigkeit zwischen der Kammer (9) und dem Inneren des Gehäusekörpers zu erlauben.

4. Beleuchtungsvorrichtung nach Anspruch 2 oder 3, **dadurch gekennzeichnet, dass** die Trennwand (12) lösbar, vorzugsweise durch eine Schnappverbindung, mit der kreisförmigen Seitenwand (5) der Abdeckung (3) verbunden ist, die in einem Stück mit dem Boden (11) und axial von diesem vorspringend gebildet ist und zur flüssigkeitsdichten Verbindung mit dem kreisförmigen Rand (6) des Befestigungssitzes (4) konstruiert ist.

5. Beleuchtungsvorrichtung nach Anspruch 4, wobei die Trennwand (12) innerhalb einer ringförmigen Nut (14), die in einem Verbindungsteil (16) zwischen dem Boden (11) und der kreisförmigen Seitenwand (5) der Abdeckung (3) gebildet ist, mit Schnappverbindung angebracht ist.

6. Beleuchtungsvorrichtung nach Anspruch 5, **dadurch gekennzeichnet, dass** der Boden (11), die kreisförmige Seitenwand (5) und der Verbindungsteil (16) aus einem Elastomermaterial hergestellt sind, während die Trennwand (12) aus einem steiferen Material als das Elastomermaterial des Bodens (11), der kreisförmigen Seitenwand (5) und des Verbindungsteils (16) hergestellt ist.

7. Vorrichtung nach Anspruch 6, wobei die Trennwand (12) aus einem nicht-elastomeren synthetischen Kunststoffmaterial hergestellt ist.

8. Vorrichtung nach einem der Ansprüche 2 bis 7, **dadurch gekennzeichnet, dass** der Boden (11) kuppelförmig ist.

## Revendications

1. Dispositif d'éclairage pour véhicules (1), en particulier un feu avant ou phare, comprenant :
- un corps de boîtier (2) définissant un siège de montage arrière (4) pour au moins une source de lumière (S) ;
- une lentille (L) agencée à l'avant dudit corps de boîtier (2) ; et
- un couvercle (3), qui peut être couplé d'une manière amovible et étanche au fluide sur ledit corps de boîtier (2) ; ledit siège de montage arrière (4) étant fermé, à l'usage, à l'arrière par ledit couvercle (3), sur le côté opposé à l'une desdites lentilles (L), dans lequel
i) ledit couvercle (3) définit, à l'arrière dudit siège de montage arrière (4), une chambre (9) logeant, à l'usage, au moins un matériau de séchage (10b) pour absorber l'humidité dans l'environnement à l'intérieur du corps de boîtier (2) ;
ii) ledit couvercle (3) a un axe de symétrie (A) et comprend une paroi latérale circulaire radialement externe (5) pour un couplage étanche au fluide avec ledit siège de montage arrière (4),
**caractérisé en ce que**, en combinaison :
iii) un bord annulaire fait saillie axialement à partir dudit siège de montage ; ledit couvercle (3) comprend une lèvre annulaire (18) flexible dans une direction radiale, vers l'extérieur par rapport audit axe (A) ; ladite lèvre annulaire (18) et ladite paroi circulaire (5) définissant entre elles un siège annulaire (19) qui est une butée axiale et radiale pour le bord annulaire (6) ;
iv) ladite lèvre annulaire (18) étant configurée pour définir, à l'usage, un verrouillage axial et radial dudit couvercle (3) sur ledit siège de montage (4) ;
v) ladite lèvre annulaire (18) est conçue pour recevoir ledit bord annulaire (6) dans ledit siège annulaire (19) avec un jeu radial ; ledit jeu radial étant assez petit pour être annulé suite à une flexion radiale vers l'extérieur de la lèvre annulaire (18) suite à une poussée axiale exercée contre ledit couvercle (3) dans une direction (D) d'insertion du couvercle (3) dans ledit siège de montage (4).

2. Dispositif selon la revendication 1, **caractérisé en ce que** ledit couvercle (3) est globalement en forme de coupelle et comprend : une paroi inférieure (11) délimitant ladite chambre (9) à l'arrière et sur le côté ; et une cloison de séparation (12) vers l'intérieur du corps de boîtier, délimitant ladite chambre (9) à l'avant ; ladite cloison de séparation (12) et ladite paroi inférieure (11) délimitant ladite chambre (9) sur les côtés opposés pour loger entre eux une enveloppe perméable à l'air (10) contenant ledit matériau de séchage (10b).

3. Dispositif d'éclairage selon la revendication 2, **caractérisé en ce que** ladite cloison de séparation (12) comprend au moins une ouverture débouchante (13) pour permettre le passage de l'air et l'humidité entre ladite chambre (9) et l'intérieur du corps de boîtier.

4. Dispositif d'éclairage selon la revendication 2 ou 3, **caractérisé en ce que** ladite cloison de séparation (12) est couplée de manière amovible, de préférence par couplage par encliquetage, à ladite paroi latérale circulaire (5) du couvercle (3) formé d'un seul tenant avec, et faisant saillie axialement de ladite paroi inférieure (11) et conçue pour le couplage étanche au fluide avec ledit bord annulaire (6) du siège de montage (4) .

5. Dispositif d'éclairage selon la revendication 4, dans lequel ladite cloison de séparation (12) est couplée par encliquetage à l'intérieur d'une rainure annulaire (14) formée dans une partie de raccordement (16) entre la paroi inférieure (11) et la paroi latérale circulaire (5) dudit couvercle (3).

6. Dispositif d'éclairage selon la revendication 5, **caractérisé en ce que** ladite paroi inférieure (11), la paroi latérale circulaire (5) et la partie de raccordement (16) sont réalisées avec un matériau élastomère, alors que ladite cloison de séparation (12) est réalisée avec un matériau plus rigide que le matériau élastomère de ladite paroi inférieure (11), de ladite paroi latérale circulaire (5) et de la partie de raccordement (16).

7. Dispositif selon la revendication 6, dans lequel ladite cloison de séparation (12) est réalisée avec une matière plastique synthétique non élastomère.

8. Dispositif selon l'une quelconque des revendications 2 à 7, **caractérisé en ce que** ladite paroi inférieure (11) est en forme de dôme.
